# FASCICULE DE BREVET EUROPEEN

(11) **EP 1 507 931 B1**
(45) Date de publication et mention de la délivrance du brevet: **04.01.2006**
(21) Numéro de dépôt: 03755169.4
(22) Date de dépôt: 20.05.2003
(51) Int. Cl.: E02D 29/14, E05D 1/06, E05D 11/10

(54) **DISPOSITIF DE FERMETURE D' UNE OUVERTURE, EN PARTICULIER REGARD DE CHAUSSEE**
VORRICHTUNG ZUM SCHLIESSEN EINER ÖFFNUNG, INSBESONDERE EINES MANNLOCHS
DEVICE FOR CLOSING AN OPENING, PARTICULARLY A MANHOLE

(30) Priorité: 24.05.2002 FR 0206393
(43) Date de publication de la demande: 23.02.2005
(73) Titulaire: SAINT-GOBAIN PAM, 54000 Nancy (FR)
(72) Inventeur: HAUER, Jean-Claude, F-54420 Saulxures lès Nancy (FR); PIETRZAK, Jean-Paul, F-54700 Blenod Lès Pont à Mousson (FR)
(86) Numéro de dépôt international: PCT/FR2003/001509
(87) Numéro de publication internationale: WO 2003/100179

(56) Documents cités:
- EP-A- 0 681 066
- GB-A- 1 544 365

## Description

La présente invention concerne un dispositif de fermeture d'une ouverture, notamment regard de chaussée, du type comprenant
- un cadre;
- un couvercle articulé par rapport au cadre autour d'un premier axe horizontal par l'intermédiaire d'au moins une première charnière entre une position ouverte et une position fermée, cette charnière comprenant un charnon de couvercle et un charnon de cadre coopérant ;
- un dispositif de verrouillage ayant une configuration de verrouillage dans laquelle le couvercle est dans une première position par rapport au cadre et est maintenu dans une position ouverte de verrouillage et une configuration de déverrouillage dans laquelle le couvercle est dans une seconde position par rapport au cadre permettant un basculement du couvercle autour du premier axe.

Elle s'applique notamment aux regards de chaussée en fonte.

On connaît des regards de chaussée dont le couvercle peut être verrouillé sur le cadre en position ouverte. Un tel regard est décrit dans le document EP-B-0 391 825.

Ce regard comprend un cadre et un tampon. Le tampon est articulé au cadre entre une position de fermeture et une position d'ouverture par l'intermédiaire d'une charnière.

Le tampon peut être verrouillé dans une position ouverte de verrouillage par un déplacement verticalement vers le bas par rapport au cadre. Dans cette position, au niveau de chaque charnière, deux surfaces de blocage planes généralement verticales du tampon et du cadre s'appliquent l'une sur l'autre et empêchent une fermeture intempestive du tampon.

Afin de déverrouiller le tampon avant de le refermer sur le cadre, le tampon doit être soulevé jusqu'à ce que les deux surfaces de blocage respectives soient hors contact l'une de l'autre. Etant donné que le tampon est massif, un effort de soulèvement important est nécessaire.

La présente invention a pour but de pallier cet inconvénient, et de proposer un dispositif dont le couvercle puisse être verrouillé dans une position ouverte de verrouillage tout en nécessitant une force de soulèvement relativement faible pour le déverrouillage du couvercle préalablement à son pivotement dans le sens de la fermeture.

A cet effet, l'invention telle que définie par la revendication 1 annexée a pour objet un dispositif du type précité, caractérisé en ce que ladite première charnière est adaptée pour permettre un basculement du couvercle en appui sur le cadre autour d'un second axe qui s'étend sensiblement perpendiculairement par rapport audit premier axe et horizontalement à l'état monté du dispositif, et en ce que le couvercle est adapté pour être amené de ladite première position par rapport au cadre vers ladite seconde position par rapport au cadre et vice-versa par un basculement du couvercle autour dudit second axe.

Selon des modes de réalisation avantageux, l'invention comporte l'une ou plusieurs des caractéristiques suivantes :
- le couvercle est articulé au cadre par l'intermédiaire d'une seconde charnière comprenant un charnon de couvercle et un charnon de cadre, et le dispositif de verrouillage est formé par cette seconde charnière qui est adaptée pour verrouiller et déverrouiller le couvercle dans sa position ouverte par un déplacement relatif de son charnon de couvercle par rapport à son charnon de cadre correspondant suivant une direction sensiblement radiale audit premier axe ;
- le dispositif définit un plan de gravité contenant le centre de gravité du couvercle, s'étendant perpendiculairement audit premier axe et sectionnant ledit premier axe en un point de référence, ce point de référence et ledit second axe définissant une première distance, le couvercle présente un point d'extrémité, qui définit un bras de levier maximal par rapport audit second axe, mesuré suivant ledit premier axe, et une deuxième distance, mesurée suivant ledit premier axe entre ce point d'extrémité et ledit second axe est supérieure à ladite première distance ;
- ladite deuxième distance est supérieure à trois fois ladite première distance ;
- ladite première distance est inférieure à une troisième distance entre ladite seconde charnière et ledit second axe ;
- ledit point de référence et ladite seconde charnière se trouvent du même côté dudit premier axe par rapport audit second axe ;
- ladite seconde charnière est adaptée pour être verrouillée par un déplacement de son charnon de couvercle sensiblement verticalement vers le bas à l'état monté du dispositif ;
- les charnons de cadre sont formés par des logements ouverts vers le haut à l'état monté du dispositif, et les charnons de couvercle sont formés par des pivots reliés au couvercle ;
- le logement de ladite seconde charnière présente une profondeur supérieure à la profondeur du logement de ladite première charnière, mesurée verticalement par rapport audit premier axe ;
- le logement de ladite première charnière comporte une paroi de fond sur laquelle s'appuie le charnon de couvercle de ladite première charnière, et le logement de ladite seconde charnière comporte une ouverture et une surface de blocage adaptée pour coopérer avec le pivot de ladite seconde charnière, lorsque la seconde charnière est dans une position de verrouillage;
- le couvercle a une forme générale circulaire ;
- le couvercle a une forme générale triangulaire et ladite première charnière et le dispositif de verrouillage sont disposés sur un même côté du triangle ;
- le triangle est un triangle rectangle, ledit même côté du triangle étant un côté à angle droit du triangle, et le dispositif de verrouillage est situé plus près de l'autre côté à angle droit que ladite première charnière ;
- le couvercle est un tampon ; et
- la position ouverte de verrouillage et la position fermée définissent un angle de sensiblement 90° entre elles.

L'invention sera mieux comprise à la lecture de la description qui va suivre, donnée uniquement à titre d'exemple et faite en se référant aux dessins annexés, sur lesquels :
- la Figure 1 est une vue de face d'un regard de chaussée selon l'invention, le tampon étant dans sa position ouverte, à l'état déverrouillé;
- la Figure 2 est une vue analogue à celle de la Figure 1, le tampon étant dans sa position ouverte de verrouillage;
- les Figures 3A et 3B sont des vues de dessus des logements des charnières du regard selon l'invention, le tampon n'étant pas représenté ;
- la Figure 4 est une vue en coupe selon la ligne IV-IV de la Figure 3B, le tampon étant dans sa position fermée;
- la Figure 5 est une vue en coupe selon la ligne V-V de la Figure 3B, le tampon étant dans sa position d'ouverture maximale ;
- la Figure 6 est une vue en coupe selon la ligne VI-VI de la Figure 3B, le tampon étant dans sa position ouverte, à l'état verrouillé ;
- la Figure 7 est une vue en coupe selon la ligne VII-VII de la Figure 3A ; et
- la Figure 8 est une vue schématique d'un second mode de réalisation d'un regard selon l'invention.

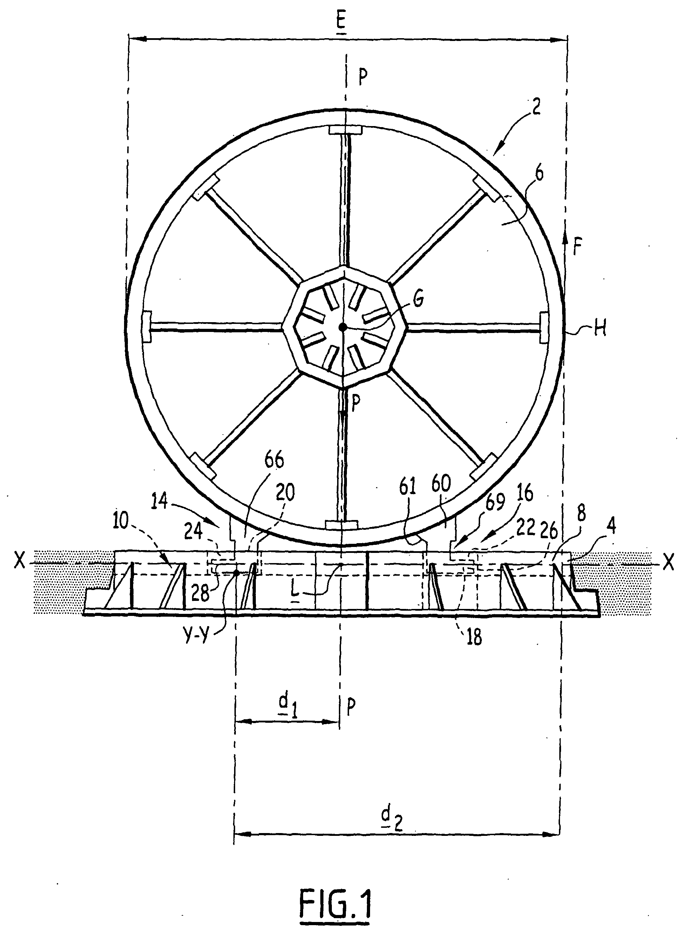

Sur la Figure 1 est représenté un regard de chaussée selon l'invention, désigné par la référence générale 2.

Ce regard 2 comporte un cadre 4 et un tampon 6, fabriqués en fonte. Le tampon 6 est articulé par rapport au cadre 4 autour d'un premier axe généralement horizontal X-X.

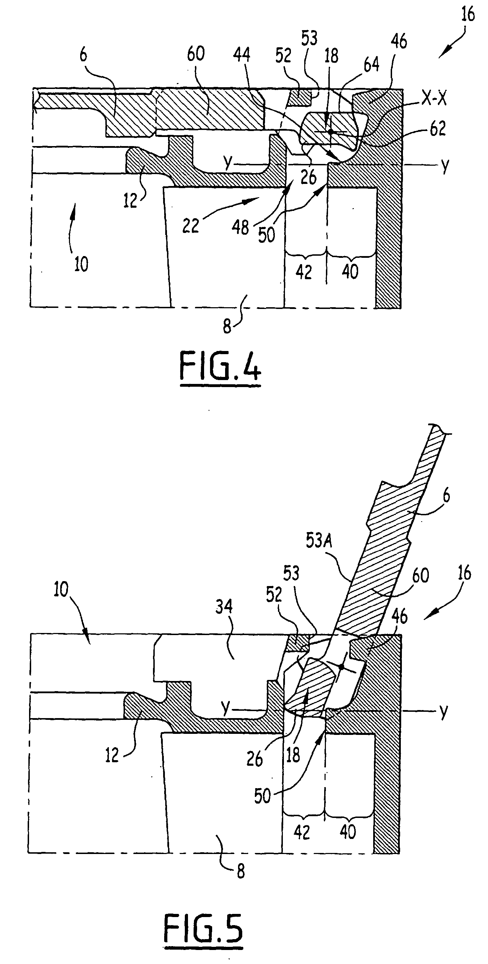

Le cadre 4 comporte un corps de base 8 qui délimite une ouverture circulaire 10 (Figures 4 à 6). A l'état monté du regard 2, cette ouverture 10 est placée dans le prolongement d'une conduite (non représentée) ou d'un puits d'axe généralement vertical.

Le corps de base 8 comporte, sur le côté intérieur de l'ouverture 10, une saillie périphérique intérieure 12, sur laquelle est disposé un joint en élastomère (non représenté). Cette saillie 12 sert de surface d'appui au tampon lorsque celui-ci est en positon fermée.

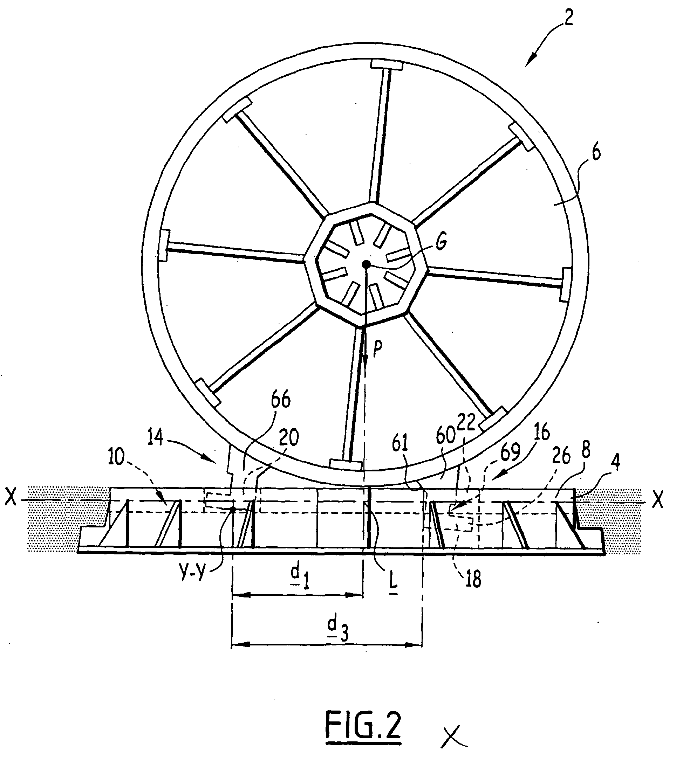

Le tampon 6 a une forme générale de disque circulaire dont le diamètre correspond approximativement au diamètre de l'ouverture 10. Le tampon a un centre de gravité G (voir Figures 1 et 2), un poids propre P, et une dimension E mesurée dans la direction de l'axe X-X, correspondant ici au diamètre du tampon.

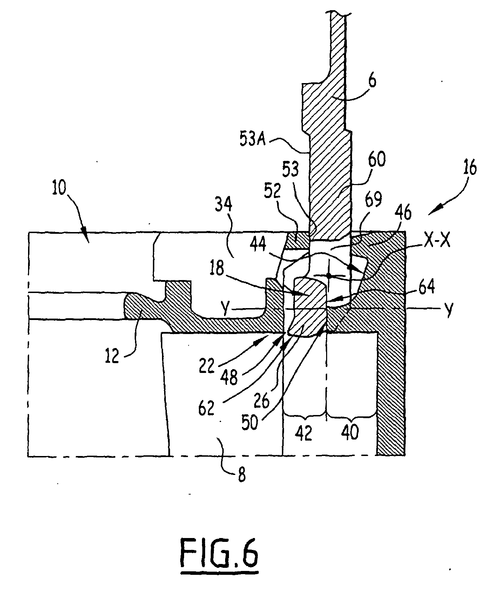

Le regard 2 comporte en outre une première 14 et une seconde 16 charnières qui relient le tampon au cadre et assurent l'articulation du tampon 6 par rapport au cadre, assurant l'articulation du tampon 6 par rapport au cadre 4 autour de l'axe X-X. Ainsi, le tampon 6 peut être déplacé entre une position d'ouverture maximale, dans laquelle le tampon est basculé d'environ 110° par rapport à l'horizontale (Figure 5) en étant maintenu en appui stable et une position fermée où le tampon est généralement horizontal (Figure 4), via une position ouverte, où le tampon est généralement vertical (Figure 6).

Chacune des charnières 16, 14 comprend un charnon de tampon 18, 20, solidaire du tampon 6, et un charnon de cadre 22, 24, solidaire du cadre 4.

La seconde charnière 16 forme un dispositif de verrouillage du tampon 6 dans sa position ouverte de verrouillage. Cette charnière 16 présente une configuration de déverrouillage (Figure 1), dans laquelle le tampon peut être déplacé de sa position ouverte de verrouillage vers sa position fermée, et une configuration de verrouillage (Figures 2 et 6), dans laquelle le tampon 6 est maintenu dans sa position ouverte de verrouillage et ne peut basculer autour de l'axe X-X.

La première charnière 14 est dépourvue de moyens de verrouillage du tampon 6 en position ouverte et est adaptée en outre pour permettre un basculement du tampon 6 autour d'un second axe Y-Y, lorsque le tampon 6 est dans sa position ouverte de verrouillage. Le second axe Y-Y s'étend sensiblement horizontalement à l'état monté du regard 2, perpendiculairement par rapport à l'axe X-X et s'étend à travers la première charnière 14. Ce basculement du tampon 6 autour de l'axe Y-Y amène la seconde charnière 16 de sa configuration de verrouillage vers sa configuration de déverrouillage et vice-versa.

Le regard 2 définit, lorsque le tampon 6 est dans sa position ouverte de verrouillage avec la seconde charnière 16 dans sa configuration de déverrouillage, un plan de gravité P-P qui comprend le centre de gravité G et qui s'étend perpendiculairement par rapport à l'axe X-X. Ce plan P-P sectionne l'axe X-X en un point de référence L. La distance entre ce point de référence L et le second axe Y-Y est nommée d₁. Cette distance d₁ est mesurée dans la direction de l'axe X-X. La distance d₁ est supérieure à 0 et de préférence comprise entre 0,1 fois et 0,5 fois la dimension E.

Le point de référence L se trouve du même côté de l'axe X-X que la charnière 16, par rapport au second axe Y-Y.

Par ailleurs, le regard définit une deuxième distance d₂ qui est la distance entre l'axe Y-Y et un point d'extrémité H du tampon 6. Le point d'extrémité H est formée par l'extrémité du tampon qui définit un bras de levier maximal par rapport à l'axe Y-Y, mesuré suivant l'axe X-X. De préférence la distance d₂ est supérieure à trois fois la distance d₁.

En conséquence, lorsque le tampon 6 est saisi près du point H afin de le faire basculer autour de l'axe Y-Y, dans le but d'amener la charnière 16 de sa configuration de verrouillage vers sa configuration de déverrouillage, une force de soulèvement F inférieure au poids propre P du tampon dans le rapport d1/d3 est nécessaire (Figure 1).

En l'occurrence chacun des charnons de tampon 18, 20 est constitué d'un pivot 26, 28 tandis que chacun des charnons de cadre 22, 24 est constitué par un logement 30, 32 de réception du pivot associé.

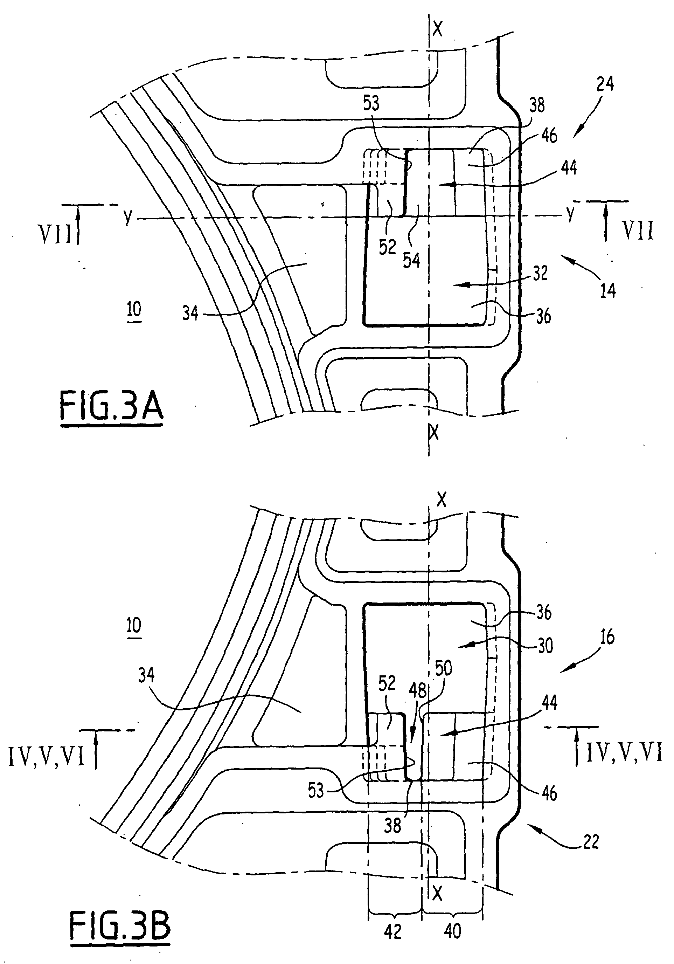

Chacun des logements 30, 32 est constitué d'un évidement ouvert vers le haut (Figures 3A et 3B).

Comme il ressort de la Figure 3B, le logement 30 de la seconde charnière 16 a la forme générale d'un L, en vue de dessus. Une première partie 34 du logement 30, débouchant dans l'ouverture 10 et constituant une première jambe du L, a une profondeur inférieure au reste du logement 30. Une deuxième partie, centrale, 36 du logement 30 comprend un trou traversant dans l'épaisseur du cadre. Une troisième partie 38 du logement qui constitue l'autre jambe du L est divisée en deux domaines 40, 42.

Le premier domaine 40 s'étend à l'écart de la première partie 34. Il comprend (Figures 4 à 6) un profil de fond 44 de cylindre partiel à section circulaire, dont l'axe coïncide avec l'axe X-X. Ce profil 44 forme une surface de charnière formant came pour le pivot 26. Une première lèvre 46 forme un bord supérieur de ce domaine 40 et chevauche partiellement le profil de fond 44.

Le second domaine 42 est disposé entre le premier domaine 40 et la première partie 34 du logement. Ce domaine 42 comprend une ouverture traversante 48 de réception du pivot 26 lorsque la charnière 16 est dans sa configuration de verrouillage (Figure 6). Le logement 30 forme, à l'interface entre les deux domaines 40, 42, une surface de blocage plane 50, qui s'étend verticalement.

Une seconde lèvre 52 formant bord supérieur de ce second domaine 42 est disposée en vis-à-vis de la première lèvre 46 et est munie d'une surface de blocage 53 qui est dirigée vers cette lèvre 46.

Le logement 32 de la première charnière 14 est sensiblement symétrique du logement 30 de la seconde charnière 16 par rapport au plan P-P (voir Figure 3A) de sorte que la troisième partie 38 du second logement 32 s'étend suivant l'axe X-X du côté opposé au premier logement 30.

Les éléments de ce logement 32 correspondant aux éléments du logement 30 portent les mêmes références. Comme différence, la troisième partie 38 de ce logement 32 comprend une paroi de fond 54 qui est disposée dans le second domaine 42 et qui s'étend du premier domaine 40 jusqu'à la première partie 34 du logement 32. Cette paroi de fond 54 se raccorde sensiblement tangentiellement à la surface de charnière formant came formée par le profil de fond 44 de sorte que ce logement 32 est dépourvu d'une ouverture 48 et donc d'une surface de blocage 50.

En conséquence, le logement 30 de la seconde charnière 16 présente une profondeur supérieure à la profondeur du logement 32 de la première charnière 14 mesurée verticalement par rapport à l'axe X-X à l'état monté.

Le pivot 26 de la seconde charnière 16 est fixé au tampon 6 par l'intermédiaire d'une partie de liaison 60 qui fait saillie du bord du tampon 6 et qui est solidaire de celui-ci. Le pivot 26 s'étend perpendiculairement à la partie de liaison 60, sensiblement dans le plan du tampon 6.

La partie de liaison 60 comprend une surface d'appui 61 qui s'étend à peu près à 45° par rapport au pivot 26. A l'état ouvert du tampon 6 et lorsque la seconde charnière 16 est dans sa configuration de verrouillage, la surface d'appui 61 s'applique contre un bord supérieur du logement 30 (voir Figure 2). La distance entre le point d'appui de la surface d'appui 61 sur le logement 30 et l'axe Y-Y, mesuré suivant l'axe X-X est nommé d₃. La distance d₁ est inférieure à la distance d₃.

La partie de liaison 60 comprend en outre une surface de blocage 53A s'étendant parallèlement au plan général du tampon 6. La surface de blocage 53A est adaptée pour coopérer avec la lèvre 52 suivant sa surface 53 lorsque le tampon 6 est en position ouverte de verrouillage. La partie de liaison 60 comprend par ailleurs un dégagement 69 pour le passage de la lèvre 52 suivant l'axe des pivots 26 afin de permettre un basculement du tampon dans le sens de la fermeture.

Le dégagement 69 est ménagé dans la surface de blocage 53A.

Le pivot 26 a une forme sensiblement cylindrique. Il présente une surface de charnière 62 qui est complémentaire de la surface de charnière du logement 44 et qui est dirigée vers un côté opposé au tampon 6. Le pivot 26 présente en outre une surface plate de blocage 64 qui se raccorde à la surface de charnière 62, et qui s'étend parallèlement au plan général du tampon. Cette surface de blocage 46 est destinée à venir au contact avec la surface plate de blocage 50 du logement 30 lorsque le tampon 6 est en position ouverte de verrouillage.

Le pivot 28 de la première charnière 14 est fixé au tampon 6 par une partie de liaison 66 et est symétrique du pivot 26 de la seconde charnière 16 par rapport au plan P-P. Il est à noter que les génératrices des surfaces de charnière des pivots 26, 28 sont identiques.

Le regard de chaussée 2 selon l'invention fonctionne de la façon suivante.

Initialement, le tampon 6 est dans sa position fermée horizontale sur le cadre (Figure 4).

Afin d'ouvrir le regard 2, le tampon 6 est basculé vers le haut. Dans un premier temps, il bascule autour de l'axe X-X par coopération des surfaces de charnière de chacune des deux charnières 14, 16. Les pivots 28, 26 se trouvent alors sensiblement dans les premiers domaines 40 des logements. Lorsque le tampon 6 est dans sa position ouverte de verrouillage, à savoir basculé de 90° par rapport à sa position fermée, le basculement est poursuivi au-delà de cette position vers sa position d'ouverture maximale (Figure 5). Les parties de liaison 60, 66 s'appliquent alors contre les bords supérieurs des logements 30, 32 et les pivots 26, 28 sont poussés vers les seconds domaines 42 des logements 30, 32. Lorsque le pivot 26 de la seconde charnière 16 se trouve au dessus de l'ouverture 48, le tampon 6 bascule autour de l'axe Y-Y en étant en appui sur la paroi de fond 54 par le pivot 28 et le pivot 26 s'enfonce partiellement dans l'ouverture 48 jusqu'à venir s'appliquer contre la surface du cadre qui se trouve en vis-à-vis de la surface de blocage 50, sa partie de liaison 60 s'appliquant quant à elle conte la lèvre 46 (Figure 5). Pour verrouiller le tampon, celui-ci est rebasculé vers sa position ouverte de verrouillage et le pivot 26 s'enfonce alors complètement dans l'ouverture 48. La seconde charnière 16 est ainsi dans sa configuration de verrouillage.

Dans cette position, les surfaces de blocage 50, 64 ainsi que 53, 53A s'appliquent l'une sur l'autre (Figure 6) et empêchent une fermeture intempestive du tampon 6. Le regard 2 se trouve alors dans la configuration illustrée sur la Figure 2.

Lorsqu'on souhaite refermer le tampon 6, il suffit de le saisir, et de le basculer vers le haut, autour de l'axe Y-Y pour faire sortir le pivot 26 de l'ouverture 48 et amener ainsi la seconde charnière 16 dans sa configuration de déverrouillage (Figure 1). Etant donné que le tampon 6, pendant ce basculement autour de l'axe Y-Y, prend appui par son pivot 28 sur la paroi du fond 54 de la première charnière 14, la force de basculement nécessaire pour libérer le pivot 26 de l'ouverture 48 est inférieure au poids propre P du tampon.

Le dispositif de verrouillage du tampon dans sa position ouverte peut être constitué par d'autres moyens. Il peut par exemple comprendre une saillie disposée sur le tampon, saillie qui s'enfiche dans un évidement correspondant ménagé dans le cadre par basculement du tampon lorsque celui-ci est dans sa position ouverte de verrouillage.

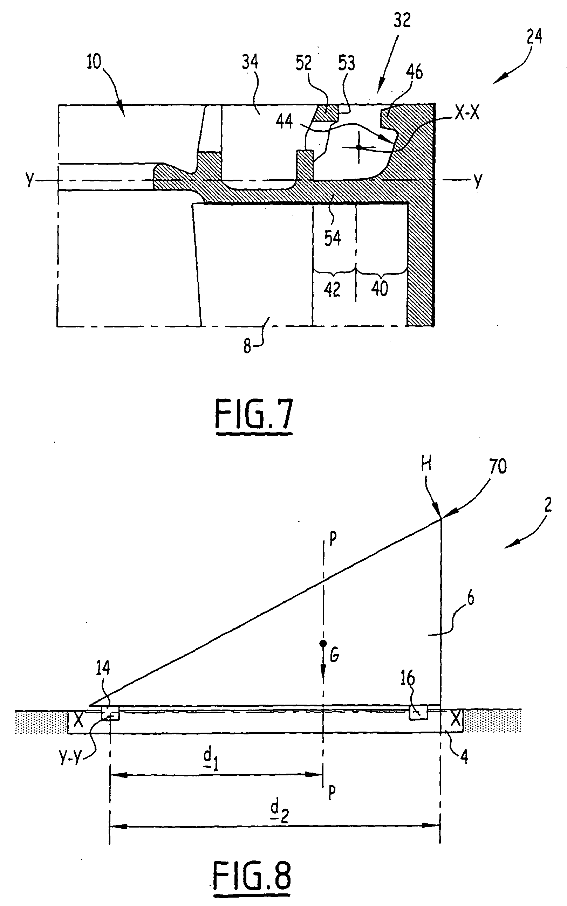

Sur la Figure 8 est représenté un second mode de réalisation du regard selon l'invention. Seules les différences par rapport au regard précité seront décrites, les éléments analogues portant les mêmes références.

Le tampon 6 a une forme générale de triangle rectangle de telle sorte que son centre de gravité G n'est pas situé à demi-distance entre les deux charnières 14, 16 disposées aux extrémités d'un même côté à angle droit du triangle rectangle. De façon avantageuse, la première charnière 14, définissant l'axe de basculement Y-Y, est située à l'emplacement d'un coin du triangle. En conséquence, le tampon peut être facilement saisi à un coin libre 70 du triangle, qui se trouve à la distance d₂ de la première charnière 14, puis basculé autour de l'axe Y-Y de manière à amener la seconde charnière 16 dans sa configuration de déverrouillage. Le basculement du tampon 6 nécessite alors une faible force de basculement.

De plus, en raison de la géométrie du tampon, le fait que l'effort de soulèvement n'est plus appliqué au centre de gravité est ici sans incidence sur le déverrouillage étant donné qu'une seule des charnières est utilisée pour le verrouillage.

D'une façon générale, dans le cas où le triangle n'est pas un triangle isocèle, la première charnière 14 est disposée à proximité d'un coin dont l'angle est plus petit que l'angle du coin associé au dispositif de verrouillage 16.

En variante, le tampon peut comprendre une seule partie de liaison munie de deux pivots en saillie d'un côté et de l'autre de la partie de liaison, un seul de ces pivots étant verrouillé en position ouverte de verrouillage d'un côté et de l'autre de celui-ci.

L'invention s'applique aux regards de chaussée ou de trottoirs, par exemple en fonte, aux dispositifs de couronnement de bouches d'égouts tels que les grilles de voirie, et aux dispositifs de fermeture de chambres techniques d'inspection d'un réseau câblé souterrain tels que les trappes.

## Revendications

1. Dispositif de fermeture d'une ouverture, notamment regard de chaussée, du type comprenant
- un cadre (4);
- un couvercle (6) articulé par rapport au cadre (4) autour d'un premier axe (X-X) horizontal par l'intermédiaire d'au moins une première charnière (14) entre une position ouverte et une position fermée, cette charnière (14) comprenant un charnon de couvercle (20) et un charnon de cadre (24) coopérant ;
- un dispositif de verrouillage (16) ayant une configuration de verrouillage dans laquelle le couvercle (6) est dans une première position par rapport au cadre et est maintenu dans une position ouverte de verrouillage et une configuration de déverrouillage dans laquelle le couvercle (6) est dans une seconde position par rapport au cadre permettant un basculement du couvercle (6) autour du premier axe (X-X),
**caractérisé en ce que** ladite première charnière (14) est adaptée pour permettre un basculement du couvercle (6) en appui sur le cadre (4) autour d'un second axe (Y-Y) qui s'étend sensiblement perpendiculairement par rapport audit premier axe (X-X) et horizontalement à l'état monté du dispositif (2), et **en ce que** le couvercle (6) est adapté pour être amené de ladite première position par rapport au cadre vers ladite seconde position par rapport au cadre et vice-versa par un basculement du couvercle (6) autour dudit second axe (Y-Y).

2. Dispositif selon la revendication 1, **caractérisé en ce que** le couvercle (6) est articulé au cadre (4) par l'intermédiaire d'une seconde charnière (16) comprenant un charnon de couvercle (18) et un charnon de cadre (22), et **en ce que** le dispositif de verrouillage est formé par cette seconde charnière (16) qui est adaptée pour verrouiller et déverrouiller le couvercle (6) dans sa position ouverte par un déplacement relatif de son charnon de couvercle (18) par rapport à son charnon de cadre (22) correspondant suivant une direction sensiblement radiale audit premier axe (X-X).

3. Dispositif selon la revendication 1 ou 2, **caractérisé en ce que** le dispositif (2) définit un plan de gravité (P-P) contenant le centre de gravité (G) du couvercle (6), s'étendant perpendiculairement audit premier axe (X-X) et sectionnant ledit premier axe (X-X) en un point de référence (L), ce point de référence (L) et ledit second axe (Y-Y) définissant une première distance (d₁), **en ce que** le couvercle (6) présente un point d'extrémité (H), qui définit un bras de levier maximal par rapport audit second axe (Y-Y), mesuré suivant ledit premier axe (X-X), et **en ce qu'**une deuxième distance (d₂), mesurée suivant ledit premier axe (X-X) entre ce point d'extrémité (H) et ledit second axe (Y-Y) est supérieure à ladite première distance (d₁).

4. Dispositif selon la revendication 3, **caractérisé en ce que** ladite deuxième distance (d₂) est supérieure à trois fois ladite première distance (d₁).

5. Dispositif selon la revendication 3 ou 4, **caractérisé en ce que** ladite première distance (d₁) est inférieure à une troisième distance (d₃) entre ladite seconde charnière (16) et ledit second axe (Y-Y).

6. Dispositif selon l'une des revendications 3 à 5, **caractérisé en ce que** ledit point de référence (L) et ladite seconde charnière (16) se trouvent du même côté dudit premier axe (X-X) par rapport audit second axe (Y-Y).

7. Dispositif selon l'une quelconque des revendications 2 à 6, **caractérisé en ce que** ladite seconde charnière (16) est adaptée pour être verrouillée par un déplacement de son charnon de couvercle (18) sensiblement verticalement vers le bas à l'état monté du dispositif (2).

8. Dispositif selon la revendication 7, **caractérisé en ce que** les charnons de cadre (22, 24) sont formés par des logements (30, 32) ouverts vers le haut à l'état monté du dispositif, et **en ce que** les charnons de couvercle (18, 20) sont formés par des pivots (26, 28) reliés au couvercle.

9. Dispositif selon la revendication 8, **caractérisé en ce que** le logement (30) de ladite seconde charnière (16) présente une profondeur supérieure à la profondeur du logement (32) de ladite première charnière (14), mesurée verticalement par rapport audit premier axe (X-X).

10. Dispositif selon la revendication 9, **caractérisé en ce que** le logement (32) de ladite première charnière (14) comporte une paroi de fond (54) sur laquelle s'appuie le charnon de couvercle (20) de ladite première charnière (14), et **en ce que** le logement (30) de ladite seconde charnière (16) comporte une ouverture (48) et une surface de blocage (50) adaptée pour coopérer avec le pivot (26) de ladite seconde charnière (16) lorsque la seconde charnière (16) est dans sa position de verrouillage.

11. Dispositif selon l'une quelconque des revendications 1 à 10, **caractérisé en ce que** le couvercle (6) a une forme générale circulaire.

12. Dispositif selon l'une quelconque des revendications 1 à 10, **caractérisé en ce que** le couvercle (6) a une forme générale triangulaire, et **en ce que** ladite première charnière (14) et le dispositif de verrouillage (16) sont disposés sur un même côté du triangle.

13. Dispositif selon la revendication 12, **caractérisé en ce que** le triangle est un triangle rectangle, ledit même côté du triangle étant un côté à angle droit du triangle, et **en ce que** le dispositif de verrouillage (16) est situé plus près de l'autre côté à angle droit que ladite première charnière (14).

14. Dispositif selon l'une quelconque des revendications précédentes, **caractérisé en ce que** le couvercle est un tampon (6).

15. Dispositif selon l'une quelconque des revendications précédentes, **caractérisé en ce que** la position ouverte de verrouillage et la position fermée définissent un angle de sensiblement 90° entre elles.

## Patentansprüche

1. Vorrichtung zum Schließen einer Öffnung, insbesondere eines Schachteinstiegs, von der Art, die aufweist
- einen Rahmen (4);
- einen Deckel (6), der an den Rahmen (4) um eine erste waagrechte Achse (X-X) über mindestens ein erstes Scharnier (14) zwischen einer offenen Stellung und einer geschlossenen Stellung angelenkt ist, wobei dieses Scharnier (14) einen Deckel-Scharnierbeschlag (20) und einen damit zusammenwirkenden Rahmen-Scharnierbeschlag (24) aufweist;
- eine Verriegelungsvorrichtung (16), die eine Verriegelungskonfiguration, in der der Deckel (6) sich in einer ersten Stellung bezüglich des Rahmens befindet und in einer offenen Verriegelungsstellung gehalten wird, und eine Entriegelungskonfiguration hat, in der der Deckel (6) in einer zweiten Stellung bezüglich des Rahmens ist, die ein Kippen des Deckels (6) um die erste Achse (X-X) ermöglicht,
**dadurch gekennzeichnet, dass** das erste Scharnier (14) ausgelegt ist, um ein Kippen des Deckels (6) in Auflage auf den Rahmen (4) um eine zweite Achse (Y-Y) zu erlauben, die sich im Wesentlichen lotrecht bezüglich der ersten Achse (X-X) und waagrecht im montierten Zustand der Vorrichtung (2) erstreckt, und dass der Deckel (6) ausgelegt ist, um durch ein Kippen des Deckels (6) um die zweite Achse (Y-Y) von der ersten Stellung bezüglich des Rahmens in die zweite Stellung bezüglich des Rahmens und umgekehrt gebracht zu werden.

2. Vorrichtung nach Anspruch 1, **dadurch gekennzeichnet, dass** der Deckel (6) am Rahmen (4) mittels eines zweiten Scharniers (16) angelenkt ist, das einen Deckel-Scharnierbeschlag (18) und einen Rahmen-Scharnierbeschlag (22) aufweist, und dass die Verriegelungsvorrichtung von diesem zweiten Scharnier (16) gebildet wird, das ausgelegt ist, um den Deckel (6) durch eine relative Verschiebung seines Deckel-Scharnierbeschlags (18) bezüglich seines entsprechenden Rahmen-Scharnierbeschlags (22) in einer zur ersten Achse (X-X) im Wesentlichen radialen Richtung in seiner offenen Stellung zu verriegeln und zu entriegeln.

3. Vorrichtung nach Anspruch 1 oder 2, **dadurch gekennzeichnet, dass** die Vorrichtung (2) eine Schwerpunktebene (P-P) definiert, die den Schwerpunkt (G) des Deckels (6) enthält, sich lotrecht zur ersten Achse (X-X) erstreckt und die erste Achse (X-X) in einem Bezugspunkt (L) schneidet, wobei dieser Bezugspunkt (L) und die zweite Achse (Y-Y) eine erste Entfernung (d₁) definieren, dass der Deckel (6) einen Endpunkt (H) aufweist, der einen maximalen Hebelarm bezüglich der zweiten Achse (Y-Y) definiert, gemessen entlang der ersten Achse (X-X), und dass eine zweite Entfernung (d₂), gemessen entlang der ersten Achse (X-X) zwischen diesem Endpunkt (H) und der zweiten Achse (Y-Y), größer ist als die erste Entfernung (d₁).

4. Vorrichtung nach Anspruch 3, **dadurch gekennzeichnet, dass** die zweite Entfernung (d₂) drei mal größer ist als die erste Entfernung (d₁).

5. Vorrichtung nach Anspruch 3 oder 4, **dadurch gekennzeichnet, dass** die erste Entfernung (d₁) kürzer ist als eine dritte Entfernung (d₃) zwischen dem zweiten Scharnier (16) und der zweiten Achse (Y-Y).

6. Vorrichtung nach einem der Ansprüche 3 bis 5, **dadurch gekennzeichnet, dass** der Bezugspunkt (L) und das zweite Scharnier (16) sich bezüglich der zweiten Achse (Y-Y) auf der gleichen Seite der ersten Achse (X-X) befinden.

7. Vorrichtung nach einem der Ansprüche 2 bis 6, **dadurch gekennzeichnet, dass** das zweite Scharnier (16) ausgelegt ist, um durch eine Verschiebung seines Deckel-Scharnierbeschlags (18) im Wesentlichen senkrecht nach unten im montierten Zustand der Vorrichtung (2) verriegelt zu werden.

8. Vorrichtung nach Anspruch 7, **dadurch gekennzeichnet, dass** die Rahmen-Scharnicrbeschläge (22, 24) von im montierten Zustand der Vorrichtung nach oben offenen Sitzen (30, 32) gebildet werden, und dass die Deckel-Scharnierbeschläge (18, 20) von mit dem Deckel verbundenen Drehzapfen (26, 28) gebildet werden.

9. Vorrichtung nach Anspruch 8, **dadurch gekennzeichnet, dass** der Sitz (30) des zweiten Scharniers (16) eine größere Tiefe aufweist als die Tiefe des Sitzes (32) des ersten Scharniers (14), gemessen senkrecht zur ersten Achse (X-X).

10. Vorrichtung nach Anspruch 9, **dadurch gekennzeichnet, dass** der Sitz (32) des ersten Scharniers (14) eine Bodenwand (54) aufweist, auf die sich der Deckel-Scharnierbeschlag (20) des ersten Scharniers (14) auflegt, und dass der Sitz (30) des zweiten Scharniers (16) eine Öffnung (48) und eine Blockierfläche (50) aufweist, die ausgelegt ist, um mit dem Drehzapfen (26) des zweiten Scharniers (16) zusammenzuwirken, wenn das zweite Scharnier (16) in seiner Verriegelungsstellung ist.

11. Vorrichtung nach einem der Ansprüche 1 bis 10, **dadurch gekennzeichnet, dass** der Deckel (6) eine allgemeine Kreisform hat.

12. Vorrichtung nach einem der Ansprüche 1 bis 10, **dadurch gekennzeichnet, dass** der Deckel (6) eine allgemeine Dreieckform hat, und dass das erste Scharnier (14) und die Verriegelungsvorrichtung (16) auf der gleichen Seite des Dreiecks angeordnet sind.

13. Vorrichtung nach Anspruch 12, **dadurch gekennzeichnet, dass** das Dreieck ein rechtwinkliges Dreieck ist, wobei die gleiche Seite des Dreiecks eine Dreiecksseite mit rechtem Winkel ist, und dass die Verriegelungsvorrichtung (16) sich näher an der anderen Seite mit rechtem Winkel befindet als das erste Scharnier (14).

14. Vorrichtung nach einem der vorhergehenden Ansprüche, **dadurch gekennzeichnet, dass** der Deckel ein Kanaldeckel (6) ist.

15. Vorrichtung nach einem der vorhergehenden Ansprüche, **dadurch gekennzeichnet, dass** die offene Verriegelungsstellung und die geschlossene Stellung einen Winkel von im Wesentlichen 90° zwischen sich bilden.

## Claims

1. Device for closing an opening, particularly a street manhole, of the type that comprises:
- a frame (4);
- a cover (6) articulated relative to the frame (4) around a first horizontal axis (X-X) via at least one first hinge (14) between an open position and a closed position, this hinge (14) comprising a cover knuckle (20) and a cooperating frame knuckle (24);
- a locking device (16) having a locked configuration in which the cover (6) is in a first position relative to the frame and is maintained in a locked-open position, and an unlocked configuration in which the cover (6) is in a second position relative to the frame, wherein the cover (6) can be pivoted around the first axis (X-X),
**characterised in that** said first hinge (14) is designed to permit pivoting of the cover (6), while bearing on the frame (4), around a second axis (Y-Y) that extends substantially perpendicularly relative to said first axis (X-X) and horizontally in the mounted condition of the device (2), and **in that** the cover (6) is designed to be moved from said first position relative to the frame toward said second position relative to the frame and *vice versa* by pivoting the cover (6) around said second axis (Y-Y).

2. Device according to claim 1, **characterised in that** the cover (6) is articulated to the frame (4) via a second hinge (16) comprising a cover knuckle (18) and a frame knuckle (22), and **in that** the locking device is formed by this second hinge (16), which is designed to lock and unlock the cover (6) in its open position by displacement of its cover knuckle (18) relative to its corresponding frame knuckle (22) in a substantially radial direction relative to said first axis (X-X).

3. Device according to either claim 1 or claim 2, **characterised in that** the device (2) defines a plane of gravity (P-P) containing the centre of gravity (G) of the cover (6), extending perpendicularly to said first axis (X-X) and intersecting said first axis (X-X) at a reference point (L), this reference point (L) and said second axis (Y-Y) defining a first distance (d₁), **in that** the cover (6) has an end point (H), which defines a maximum lever arm relative to said second axis (Y-Y), measured along said first axis (X-X), and **in that** a second distance (d₂), measured along said first axis (X-X) between this end point (H) and said second axis (Y-Y), is longer than said first distance (d₁).

4. Device according to claim 3, **characterised in that** said second distance (d₂) is longer than three times said first distance (d₁).

5. Device according to either claim 3 or claim 4, **characterised in that** said first distance (d₁) is shorter than a third distance (d₃) between said second hinge (16) and said second axis (Y-Y).

6. Device according to any one of claims 3 to 5, **characterised in that**, relative to said second axis (Y-Y), said reference point (L) and said second hinge (16) are disposed on the same side of said first axis (X-X).

7. Device according to any one of claims 2 to 6, **characterised in that** said second hinge (16) is designed to be locked by displacement of its cover knuckle (18) substantially vertically downward in the mounted condition of the device (2).

8. Device according to claim 7, **characterised in that** the frame knuckles (22, 24) are formed by seats (30, 32) that are upwardly open in the mounted condition of the device, and **in that** the cover knuckles (18, 20) are formed by pivots (26, 28) connected to the cover.

9. Device according to claim 8, **characterised in that** the seat (30) of said second hinge (16) has a depth greater than the depth of the seat (32) of said first hinge (14), measured vertically relative to said first axis (X-X).

10. Device according to claim 9, **characterised in that** the seat (32) of said first hinge (14) is provided with a bottom wall (54) on which there bears the cover knuckle (20) of said first hinge (14), and **in that** the seat (30) of said second hinge (16) is provided with an opening (48) and a blocking surface (50) designed to cooperate with the pivot (26) of said second hinge (16) when the second hinge (16) is in its locked position.

11. Device according to any one of claims 1 to 10, **characterised in that** the cover (6) has a circular general shape.

12. Device according to any one of claims 1 to 10, **characterised in that** the cover (6) has a triangular general shape and **in that** said first hinge (14) and the locking device (16) are disposed on a single side of the triangle.

13. Device according to claim 12, **characterised in that** the triangle is a right triangle, said single side of the triangle being one side of the right angle of the triangle, and **in that** the locking device (16) is situated closer to the other side of the right angle than said first hinge (14).

14. Device according to any one of the preceding claims, **characterised in that** the cover is a sealing lid (6).

15. Device according to any one of the preceding claims, **characterised in that** the locked-open position and the closed position define an angle of substantially 90° between one another.
